# EUROPÄISCHE PATENTSCHRIFT

(11) **EP 3 221 677 B1**
(45) Veröffentlichungstag und Bekanntmachung des Hinweises auf die Patenterteilung: **24.07.2019**
(21) Anmeldenummer: 15797600.2
(22) Anmeldetag: 19.11.2015
(51) Int. Cl.: G01K 7/02, H01B 7/18, H01B 7/36

(54) **THERMOLEITUNG UND MODULBLOCK ZUR VERBINDUNG MIT EINEM THERMOMESSSYSTEM**
THERMAL LINE AND MODULE BLOCK FOR CONNECTION TO A THERMAL MEASUREMENT SYSTEM
LIGNE THERMOÉLECTRIQUE ET BLOC MODULAIRE POUR LA CONNEXION À UN SYSTÈME DE MESURE THERMIQUE

(30) Priorität: 20.11.2014 DE 102014017157
(43) Veröffentlichungstag der Anmeldung: 27.09.2017
(73) Patentinhaber: IPETRONIK GmbH & Co. KG, 76532 Baden-Baden (DE)
(72) Erfinder: BACHER, Stephan, 82140 Olching (DE)
(74) Vertreter: Samson & Partner Patentanwälte mbB
(86) Internationale Anmeldenummer: PCT/EP2015/002321
(87) Internationale Veröffentlichungsnummer: WO 2016/078767

(56) Entgegenhaltungen:
- EP-A1- 0 161 065
- EP-A1- 0 447 062
- WO-A1-2009/124540
- US-A- 5 910 030
- US-A1- 2011 083 877
- BUREAU OF MINES: "Improvements in Low Voltage Trailing Cable Insulation", NTIS TECH NOTES, US DEPARTMENT OF COMMERCE. SPRINGFIELD, VA, US, 1. November 1986 (1986-11-01), Seiten 1257-1258, XP001701217, ISSN: 0889-8464

## Beschreibung

### GEBIET DER ERFINDUNG

Die vorliegende Erfindung bezieht sich allgemein auf das Gebiet der mobilen Messtechnik, insbesondere auf eine Thermoleitung zur Übertragung eines elektrischen Signals und ein Modulblock zur elektrischen und mechanischen Verbindung mit der Thermoleitung, sowie ein entsprechendes Thermomesssystem bestehend aus mehreren Modulblöcken zur Signalübertragung in einem Kraftfahrzeug.

### HINTERGRUND DER ERFINDUNG

Es sind allgemein elektrische Vorrichtungen wie Bedienelemente, Steuergeräte, Aktuatoren oder Sensoren bekannt, die insbesondere in Kraftfahrzeugen geeignet sind, Zustandsgrößen oder allgemein physikalische Parameter zu messen. Eine häufig zu ermittelnde Zustandsgröße stellt die Temperatur dar. Entsprechend kann eine elektrische Vorrichtung als Temperaturmessvorrichtung, insbesondere als ein sogenanntes Thermoelement ausgestaltet sein, das zur Messung der Temperatur an einem ausgewählten Ort in einem Kraftfahrzeug (z.B. Abgasrohr, Katalysator, Kühlwasser und Öltemperatur) verwendet werden kann.

Die Funktionsweise eines Thermoelements basiert im Wesentlichen darauf, dass zwischen zwei aus unterschiedlichen Werkstoffen hergestellten Drahtleitern, der sogenannten Thermoleitung, die jeweils an einem Ende verbunden sind, eine thermoelektrische Spannung entsteht, wenn die Verbindungsstelle (Messstelle) eine andere Temperatur aufweist als die beiden offenen Leiterenden der Thermoleitung, an welchen die Thermospannung messbar ist. Der aufgrund unterschiedlicher Leitermetalle entstehende Spannungsunterschied zwischen den beiden offenen Leiterenden trägt maßgeblich zur Bestimmung der Messstellentemperatur bei.

In der Automobil- und Zuliefererindustrie finden eine Vielzahl solcher Thermoleitungen als Teil von Messsystemen in Versuchsfahrzeugen Anwendung. Die stetige Weiterentwicklung verbunden mit der Zunahme von Funktionen, die ein Kraftfahrzeug bietet, führt dabei zu einer immer größer werdenden Anzahl von Komponenten und Steuerungen, die messtechnisch während der Versuchsphase überprüft werden müssen. Demnach ist es üblich, dass in einem Versuchsfahrzeug etwa 600 bis 800 Messstellen zur Messung von thermischen Bedingungen installiert werden. Dabei setzt sich der Verkabelungsaufwand aus der Rüstzeit und der verwendeten Kabelmenge zusammen. Auch der für die Messtechnik benötigte Platz im Versuchsfahrzeug spielt eine wichtige Rolle.

Zur Reduzierung der Kabelmenge sind Modulblöcke, auch bekannt als (Mess-) Module mit konventionellen Steckverbindern, zur Aufnahme einer Vielzahl von Thermoleitungen bekannt. Diese erfassen von den Sensoren gesammelte Daten und bereiten diese auf, d.h. Signalaufbereiter verstärken und digitalisieren die Daten und leiten diese an externe Datenspeicher, sogenannte Datenlogger weiter. Dazu umfassen die Module ferner Mikroprozessoren und stellen somit digitale Schnittstellen bereit, um die gesammelten Daten der Außenwelt bereit zu stellen. Die digitalen Schnittstellen ermöglichen z.B. eine Anbindung der Module an einen im Fahrzeug verbauten Datenlogger. Ferner ermöglichen die digitalen Schnittstellen auch eine Verbindung der Module untereinander.

Typischerweise beträgt die Rüstzeit für diese Messtechnik, d.h. insbesondere die Verbindung der Thermoleitungen mit den Modulblöcken, mindestens vier Wochen pro Versuchsfahrzeug.

Im Stand der Technik ist diesbezüglich bekannt, dass Thermoleitungen mit einem manuell zu konfektionierenden Stecker ausgebildet sind. Dabei wird eine Thermoleitung, d.h. die jeweils zwei Leiter pro Thermoleitung, mit einem Stecker verbunden, der wiederum in ein Modulblock eingesteckt wird. Über den Datenlogger findet dann die Übertragung der Messdaten an ein Auswertegerät (z.B. ein PC oder ein Laptop) statt. Die Berücksichtigung der richtigen Polung der zwei unterschiedlichen Leiter einer Thermoleitung führt zu einer langen Rüstzeit. Darüber hinaus sind Verpolungen aufgrund der Verwechslungsgefahr der beiden Leiter selbst dann nicht vollständig auszuschließen, wenn sich die Leiter durch einen Farbcode unterscheiden.

Die Offenlegungsschrift WO 88/02 106 A1 betrifft eine Thermoelementleitung, die ein positives Thermoelement, ein negatives Thermoelement, einen Mantel und eine verdichtete Keramik zum Isolieren der Thermoelemente umfasst. Der Mantel umfasst insbesondere ein oxidationsbeständiges Gemisch, das einen Wärmekoeffizienten aufweist, der ungefähr dem des negativen Thermoelements entspricht, sowie einen Schmelzpunkt von über 1300° C.

Aus der Offenlegungsschrift JP 2007 078 420 A ist ein Thermoelement bekannt, das mit PFA ummantelt ist. Insbesondere umfasst das Thermoelement auch eine positive Leitung und eine negative Leitung, wobei die Leitungen nebeneinander angeordnet sind und mit PFA ummantelt sind.

Aus dem US-Patent Nr. 7,234,864 B2 ist eine Vergleichsmessstelle in einem mehrkanaligen Anschlussblock zur Bestimmung der Vergleichsstellentemperatur bekannt.

EP0161065 offenbart eine Leitung zur Übertragung eines elektrischen Signals.

BUREAU OF MINES: "Improvements in Low Voltage Trailing Cable Insulation",NTIS TECH NOTES, US DEPARTMENT OF COMMERCE. SPRINGFIELD, VA, US, 1. November 1986 (1986-11-01), Seiten 1257-1258,ISSN: 0889-8464 offenbart eine Thermoleitung umfassend zwei Adern.

US5910030 offenbart einen Modulblock umfassend eine Gruppe von Anschlüssen. WO2009/124540 offenbart einen Stecker und eine Steckdose.

EP0447062 offenbart ein Orientierungsmerkmal eines elektrischen Kabels

Aufgabe der vorliegenden Erfindung ist es, eine verpolsichere Thermoleitung zur Verfügung zu stellen, sowie einen entsprechenden Modulblock zur elektrischen Verbindung mit der Thermoleitung.

### KURZFASSUNG DER ERFINDUNG

Nach einem ersten Aspekt stellt die vorliegende Erfindung eine verpolsichere Thermoleitung gemäß Anspruch 1 bereit.

Nach einem zweiten Aspekt stellt die vorliegende Erfindung ein Modulblock gemäß Anspruch 6, bestehend aus zwei Kontaktstiften, einem Aufnahmekanal und einer Zugentlastung insbesondere zur elektrischen und mechanischen Kontaktierung mit einer Thermoleitung nach dem ersten Aspekt, bereit.

Nach einem dritten Aspekt stellt die vorliegende Erfindung ein System von Modulblöcken gemäß Anspruch 11, bestehend aus wenigstens zwei Modulblöcken und einer Grundplatte zur Aufnahme einer Vielzahl von Thermoleitungen nach dem ersten Aspekt bereit.

Weitere Aspekte und Merkmale der vorliegenden Erfindung ergeben sich aus den abhängigen Ansprüchen, den beigefügten Zeichnungen und der nachfolgenden Beschreibung.

### KURZBESCHREIBUNG DER ZEICHNUNG

Ausführungsbeispiele der Erfindung werden nun beispielhaft und unter Bezugnahme auf die beigefügten Figuren beschrieben, in denen:
Fig. 1a, 1b und 1c jeweils ein Ausführungsbeispiel einer Thermoleitung gemäß der vorliegenden Erfindung in einer Querschnittsansicht veranschaulicht;
Fig. 2 schematisch ein Modulblock zeigt;
Fig. 3 schematisch einen Kontaktstift im elektrisch verbundenen Zustand mit der Thermoleitung in einer Längsschnittansicht veranschaulicht; und
Fig. 4 das System von Modulblöcken, bestehend aus zwei Modulblöcken und einer Grundplatte, gemäß der vorliegenden Erfindung schematisch darstellt.

### BESCHREIBUNG DER BEVORZUGTEN AUSFÜHRUNGSBEISPIELE

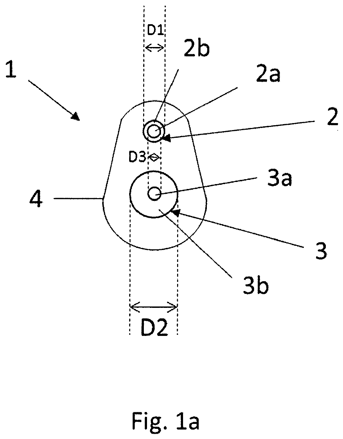

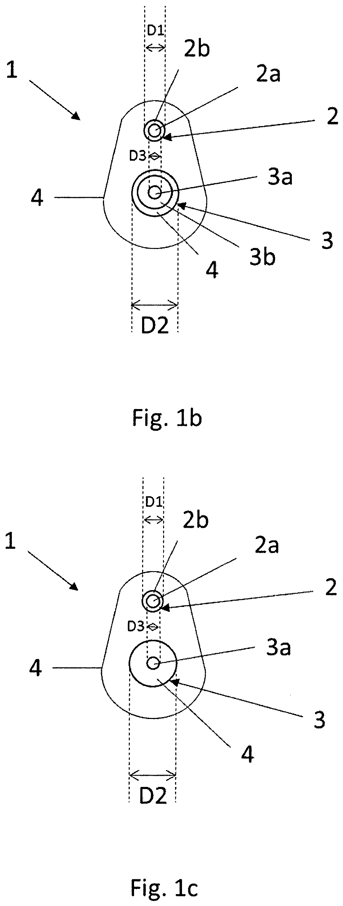

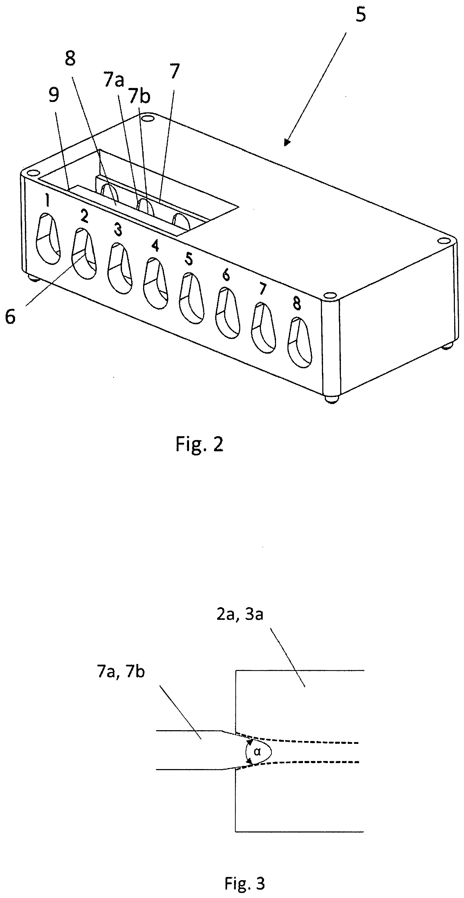

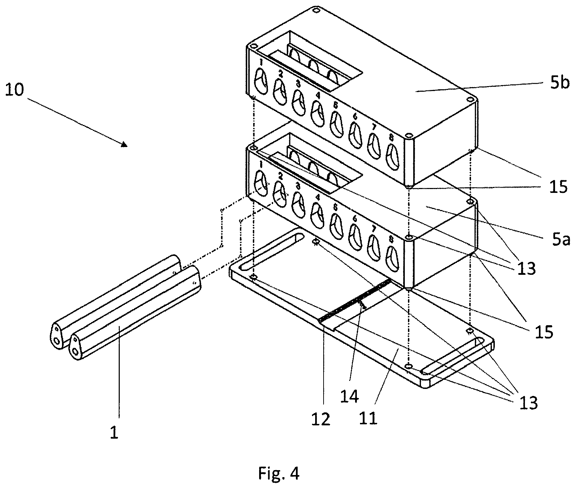

In Fig. 1a, 1b und 1c ist jeweils ein Ausführungsbeispiel einer Thermoleitung in Übereinstimmung mit der vorliegenden Erfindung veranschaulicht. In der Fig. 2 ist ein Ausführungsbeispiel eines Modulblocks, zum Anschluss einer erfindungsgemäßen Thermoleitung veranschaulicht. Fig. 3 stellt beispielhaft die Thermoleitung und ein Kontaktstift des Modulblocks in einem elektrisch verbundenen Zustand dar. In der Fig. 4 ist beispielhaft ein System von Modulblöcken gemäß der Erfindung dargestellt. Vor einer detaillierten Beschreibung folgen zunächst allgemeine Erläuterungen zu den Ausführungsbeispielen und deren Vorteile.

Die erfindungsgemäße Thermoleitung ist in erster Linie für die Anwendung in der mobilen Fahrzeug-Messtechnik gedacht, insbesondere zur Anwendung in Flottentests von Versuchsfahrzeugen, sowie am Prüfstand.

Die Ausführungsbeispiele betreffen eine Thermoleitung mit einer ersten Ader und einer zweiten Ader. Grundsätzlich können die beiden Adern aus allen gängigen Werkstoffen (z.B. Kupfer, Eisen oder Nickel) ausgebildet sein. Typischerweise finden genormte Thermomaterialien (z.B. Typ T, Typ J oder Typ K) als Adern Verwendung. Dabei weist eine Thermoleitung typischerweise zwei Adern mit unterschiedlichen Werkstoffen auf. So setzt sich beispielsweise eine Thermoleitung des Typs T aus einer Kupfer-Ader und einer Kupfer-Nickel-Ader zusammen. In einer bevorzugten Ausführungsform ist die erste Ader aus Nickel und die zweite Ader aus Nickel- Chrom (Typ K) ausgebildet. Nach einem nebengeordneten Aspekt weisen die erste Ader und zweite Ader den gleichen Durchmesser auf.

Die Thermoleitung umfasst außerdem ein erstes Aderisoliermaterial und ein zweites Aderisoliermaterial, sowie ein Außenisoliermaterial. Das Isoliermaterial wird abhängig von der gewünschten Temperaturbeständigkeit gewählt. In manchen Ausführungsformen weisen die Aderisolierungen und/ oder die Außenisolierung unterschiedliche Materialien auf. Außerdem kann eine Isolierung auch mehrere Isoliermaterialien aufweisen. Die Gesamttemperaturbeständigkeit einer Thermoleitung richtet sich im Allgemeinen nach der niedrigsten Temperaturbeständigkeit eines Isoliermaterialbestandteils. Die Isolierung kann aus verschiedenen Materialien hergestellt sein, wie sie für eine Thermoleitung typisch sind (z.B. Kunststoff, Silikon, Teflon oder Glasseide). Vorteilhafterweise weist das Aderisoliermaterial und das Außenisoliermaterial Teflon auf, da dieser Kunststoff eine hohe Witterungsbeständigkeit und eine vergleichsweise hohe Isolationsfestigkeit aufweist. Insbesondere kann es PTFE (Polytetrafluorethylen) aufweisen, das eine Temperaturbeständigkeit bis etwa 260°C besitzt. Die vorliegende Erfindung ist nicht auf eine spezielle Materialausgestaltung der Isolierung beschränkt.

In den Ausführungsbeispielen ist die erste Ader mit dem ersten Aderisoliermaterial mindestens einmal ummantelt und bildet ein erstes Leitungselement. Die zweite Ader ist mit dem zweiten Aderisoliermaterial mindestens einmal ummantelt und/oder mit dem Außenisoliermaterial mindestens einmal separat ummantelt und bildet ein zweites Leitungselement. Die Umhüllung bzw. Ummantelung des elektrischen Leiters bzw. der Ader kann auch mehrlagig, d.h. mehrfach durchgeführt sein, und zwar entsprechend den Anforderungen an die elektrische und wärmebeständige Isolierung. Ferner weist jedes Leitungselement einen im Wesentlichen kreisrunden Querschnitt auf.

Außerdem weist das erste Leitungselement einen ersten Außendurchmesser und das zweite Leitungselement einen zweiten Außendurchmesser auf, wobei sich der erste Außendurchmesser von dem zweiten Außendurchmesser unterscheidet. Der erste Außendurchmesser entspricht dem Durchmesser der ersten Ader mit dem ersten Aderisoliermaterial. Der zweite Außendurchmesser entspricht dem Durchmesser der zweiten Ader mit dem zweiten Aderisoliermaterial und/oder mit dem mindestens einmal separat ummantelten Außenisoliermaterial.

In einem Ausführungsbeispiel der Erfindung weist das zweite Leitungselement nur das zweite Aderisoliermaterial auf und der zweite Außendurchmesser ist größer als der erste Außendurchmesser. Gemäß diesem Ausführungsbeispiel ist der Durchmesser der Aderisolierung der zweiten Ader größer als der der Aderisolierung der ersten Ader.

Die beiden Leitungselemente der erfindungsgemäßen Thermoleitung sind gemeinsam mit dem Außenisoliermaterial wenigstens einmal ummantelt. Das Ummanteln der Leitungselemente mit dem Außenisoliermaterial kann in einem Bondverfahren ausgeführt werden. Die erfindungsgemäßen Ausführungsformen der beiden Leitungselemente sind demnach von dem Außenisoliermaterial umgeben. Das Außenisoliermaterial kann in manchen Ausführungsformen mehrfach um die zwei Leitungselemente ummantelt sein. Das Außenisoliermaterial dient nicht nur als zusätzliche Isolierschicht, sondern es ist derart angeordnet, dass die zwei Leitungselemente im Wesentlichen mit gleichem Abstand parallel zueinander verlaufen.

Aufgrund dieses Aufbaus weist der Querschnitt der erfindungsgemäßen Thermoleitung, bestehend aus den beiden Leitungselementen und dem Außenisoliermaterial, eine verpolsichere Kodierung auf. Demnach ist sichergestellt, dass ein elektrischer Anschluss der Thermoleitung nicht in falscher Polarität stattfinden kann. Der Querschnitt der erfindungsgemäßen Thermoleitung kann asymmetrisch ausgebildet sein. Insbesondere kann der Querschnitt eine asymmetrisch geformte Ecke oder Kante aufweisen. Der Querschnitt kann auch aus einem kreisförmigen Bogenabschnitt und aus zwei eben ausgebildeten Abschnitten bestehen, die sich zu einer Form vereinigen. Die dadurch entstehende Kante kann außerdem als Rundung ausgebildet sein. In einer bevorzugten Ausführungsform weist der Querschnitt eine Dreiecksform oder eine "birnenförmige" bzw. "tropfenförmige" Struktur auf. Vorteilhaft ist insbesondere die "birnenförmige" bzw. "tropfenförmige" Struktur, da das bevorzugt als Außenisoliermaterial verwendete Teflon (z.B. PTFE) durch seine mechanischen Eigenschaften gut an diese Form anzupassen ist.

Die Erfindung betrifft ferner ein Modulblock, der eine Gruppe von Anschlüssen umfasst, die jeweils einen ersten Kontaktstift und einen zweiten Kontaktstift zur elektrischen Kontaktierung mit der ersten Ader und der zweiten Ader der erfindungsgemäßen Thermoleitung umfassen. Die Erfindung betrifft auch ein System, bestehend aus einer Thermoleitung und einem Modulblock. Der Modulblock ist für einen zuverlässigen Empfang der elektrischen Signale von den einzelnen Sensoren in einem Thermomesssystem verantwortlich.

Der Modulblock kann einteilig oder auch mehrteilig ausgebildet sein. Insbesondere kann er aus Kunststoff oder Aluminiumdruckguss ausgebildet sein. Er umfasst eine Platine, an der die zwei Kontaktstifte pro Anschluss nicht lösbar angebracht sind. Außerdem können die zwei Kontaktstifte pro Anschluss im Wesentlichen senkrecht zur Platine angeordnet sein.

Außerdem umfasst der erfindungsgemäße Modulblock jeweils einen Aufnahmekanal pro Anschluss. Dieser ist so angeordnet, dass die zwei Kontaktstifte in den Aufnahmekanal hineinreichen. Die Kontaktstifte können in Längsrichtung des Aufnahmekanals angeordnet sein. Außerdem können sich die Kontaktstifte mit ihrem nichtbefestigten Ende in den Aufnahmekanal erstrecken. In einer bevorzugten Ausführungsform ist der Querschnitt des Aufnahmekanals derart ausgebildet, dass die erfindungsgemäße kodierte Thermoleitung verpolsicher in den Aufnahmekanal eingeführt werden kann. Demzufolge weist die Öffnung des Aufnahmekanals die entsprechende Gegenform der kodierten Thermoleitung auf. Vorteilhafterweise wird durch eine solche Ausbildung des Modulblocks verhindert, dass die Thermoleitung falsch montiert wird, d.h. eine manuelle Verpolung der Thermoleitung ausgeschlossen werden kann. Der Querschnitt des Aufnahmekanals kann sich in manchen Ausführungsformen nach innen verjüngen. Dadurch kann eine stabile mechanische Verbindung zwischen Thermoleitung und Modulblock erreicht werden.

Der Abstand zwischen den zwei Kontaktstiften ist so ausgebildet, dass jeweils ein Kontaktstift eine Ader der eingeführten Thermoleitung im Wesentlichen axial kontaktiert. Jede Ader besteht aus einer Vielzahl von Litzen, bevorzugt aus 7 Litzen, wodurch sich im Querschnitt der Ader Zwischenräume ergeben. Eine Kontaktierung bzw. elektrische Verbindung liegt demnach vor, wenn die zwei Kontaktstifte jeweils in die Zwischenräume der jeweils mit einer Vielzahl von Litzen ausgebildeten Adern eindringen. Eine Kontaktierung kann auch dann gewährleistet sein, wenn einer der zwei Kontaktstifte zwischen das Aderisoliermaterial und einer oder mehrerer Litzen eindringt. Eine Kontaktierung kann auch durch Berührung eines Kontaktstifts mit der Stirnseite einer Ader gewährleistet sein. In einer bevorzugten Ausführungsform dringen beide Kontaktstifte ungefähr 1 bis 3 mm axial in jeweils eine Ader der erfindungsgemäßen Thermoleitung ein.

In manchen Ausführungsformen sind die zwei Kontaktstifte als dünne Nadeln ausgebildet. Außerdem können die Nadelspitzen abgerundet geformt sein. Vorteilhafterweise wird durch eine Abrundung der Nadelspitze die Kontaktierung bzw. das Eindringen der Nadel in die Zwischenräume der Aderlitzen erleichtert. Die Nadeln können aus Kupfer oder Messing hergestellt sein. In einer bevorzugten Ausführungsform sind die Nadeln aus Stahl in Verbindung mit einer Goldoberfläche hergestellt.

Außerdem umfasst der erfindungsgemäße Modulblock eine Zugentlastung zur zugentlastenden und mechanischen Verbindung einer eingeführten Thermoleitung. Vorteilhafterweise verhindert die Zugentlastung, dass aufgrund äußerer Einwirkungen (z.B. Vibrationen, Zug- bzw. Druckkräfte) die elektrische Verbindung zwischen einer Thermoleitung und dem Modulblock wieder getrennt wird. In manchen Ausführungsformen weisen die zwei Kontaktstifte eines Anschlusses jeweils einen Spreizwinkel auf, wodurch die Thermoleitung selbstständig in dem Modulblock gehalten wird. Eine sich konisch in Richtung der Platine verjüngende Kabelführung kann die Klemmwirkung der kontaktierten Thermoleitung erhöhen. In manchen Ausführungsformen kann in das Gehäuse eine Schraube, insbesondere eine Madenschraube angeordnet sein und eine innige Verbindung bzw. eine Klemmung mit der Isolierung der Thermoleitung eingehen. Bevorzugt wirkt die Madenschraube radial auf die Thermoleitung. Dadurch wird die Thermoleitung zuverlässig mit dem zugentlastenden Element fixiert.

Nach einem nebengeordneten Aspekt der Erfindung ist die Zugentlastung als Schneid-Klemm-Lösung vorgesehen. Dabei kann das Zugentlastungselement mindestens eine Kralle mit einer Sperrklinke aufweisen, wobei die Sperrklinke in die Isolierung der Thermoleitung eindringt und damit die Thermoleitung vergleichbar mit einem Widerhaken mechanisch fixiert. In einer bevorzugten Ausführungsform weist die Kralle zwei Sperrklinken auf, um die in den Modulblock eingeführte Thermoleitung an zwei Stellen zu fixieren. In beiden Fällen ist gewährleistet, dass die Thermoleitung durch die Zugentlastung nicht verletzt wird und dass die Dichtigkeit für eine IP67 Schutzklasse erzielt werden kann.

Nach einem Ausführungsbeispiel der Erfindung kann im Innern des Modulblocks wenigstens ein Dichtelement zur Abdichtung zwischen dem Aufnahmekanal und der eingeführten Thermoleitung vorgesehen sein. Das Dichtelement dient bei eingeführter Thermoleitung als wirksamer Dichtkörper zwischen der Innenwand der Öffnung des Aufnahmekanals und dem Außenmantel der Thermoleitung. Das Dichtelement kann ferner als Silikondichtung ausgebildet sein und gegenüber Temperaturschwankungen stabil sein. In bevorzugter Ausführungsform weist die Silikondichtung eine integrierte Dichtlippe in der Kodierungsform auf. Die Ausführungsformen des Dichtelements sind für sämtliche Kodierungsformen des Aufnahmekanals verwendbar und beinhalten eine absolute Dichtigkeit gegen Einflüsse wie Regen, Schnee oder Staub.

In manchen Ausführungsformen weist die Gruppe von Anschlüssen des Modulblocks eine Vielzahl von Anschlüssen auf, wobei für jeden der Anschlüsse jeweils zwei Kontaktstifte, eine Zugentlastung, ein Dichtelement und eine Kabelführung vorgesehen sind. Bevorzugt umfasst die Gruppe von Anschlüssen genau acht Anschlüsse zur Verbindung mit acht Thermoleitungen.

Die Erfindung betrifft ferner ein System von Modulblöcken mit wenigstens zwei erfindungsgemäßen Modulblöcken zur Aufnahme einer entsprechenden Anzahl von Thermoleitungen. In der bevorzugten Ausführungsform ermöglicht ein Modulblock die Aufnahme von acht Thermoleitungen.

Ferner umfasst das System von Modulblöcken eine Grundplatte zum Anschließen eines Flachbandkabels an das System von Modulblöcken, wobei die Grundplatte mit einem ersten Modulblock, mittels mindestens einem Verbindungselement mechanisch und elektrisch verbunden ist. Vorteilhafterweise dient solch ein Verbindungselement als kabellose Verbindung zwischen der Grundplatte und dem ersten Modulblock und ist bevorzugt als sogenannter Verbindungsbolzen ausgebildet.

Ferner ist der erste Modulblock mit einem oder mehreren weiteren Modulblöcken mittels mindestens einem Verbindungselement mechanisch und elektrisch verbunden.

In einer bevorzugten Ausführungsform weist die Grundplatte vier Kontaktstellen für die Verbindungsbolzen auf, die mit vier Verbindungsbolzen zur mechanischen und elektrischen Verbindung von der Grundplatte mit dem ersten Modulblock vorgesehen sind. Die Verbindungselemente dienen dabei als Stromverbindung und CAN Datenübertragung. Insbesondere ermöglichen vier Verbindungspunkte pro Modulblock die Möglichkeit +12V, GND, CAN-H und CAN-L über einen Anschluss zu führen. In manchen Ausführungsformen sind die Verbindungselemente als Bajonettverschlüsse oder als Verbindungszapfen ausgebildet.

Das Flachbandkabel ist für die Versorgungsspannung des Systems von Modulblöcken vorgesehen. Dieses führt die Versorgungsspannung zu dem jeweiligen Modulblock hin. Vorteilhafterweise kann das System von Modulblöcken mittels der Grundplatte an einer bevorzugten Stelle mit dem Flachbandkabel verbunden werden.

Das Flachbandkabel umfasst vier Adern, ist bevorzugt aus Silikon hergestellt und deckt einen Arbeitstemperaturbereich von -40°C bis +125°C ab. Darüber hinaus ist das Flachbandkabel, wie auch der Modulblock, wasser- und staubdicht nach der Schutzklasse IP67.

Bevorzugt weist die Grundplatte Nadelkontakte auf, die dazu ausgelegt sind, in das anzuschließende Flachbandkabel an einer beliebigen Stelle einzudringen und die Adern des Flachbandkabels elektrisch zu kontaktieren.

Demzufolge umfasst die Erfindung vorteilhafterweise eine Thermoleitung zur Verbindung mit einem Modulblock, wobei die Thermoleitung ohne manuell zu konfektionierende Stecker auskommt. Dadurch wird neben einer vergünstigten Herstellung insbesondere die Montagezeit im Fahrzeug auf etwa 1/8 der üblichen Rüstzeit verkürzt.

Zurückkommend zu den Figuren veranschaulicht die Fig. 1a, 1b und 1c jeweils eine im Querschnitt dargestellte Thermoleitung 1 gemäß der Erfindung. Die Fig. 2 veranschaulicht ein Ausführungsbeispiel eines Modulblocks zur elektrischen Verbindung mit der Thermoleitung 1. Fig. 3 veranschaulicht die elektrische Kontaktierung zwischen einer Ader 2a, 3a der Thermoleitung 1 und einem Kontaktstift 7a, 7b und die Fig. 4 veranschaulicht ein System von Modulblöcken gemäß der Erfindung.

Die Thermoleitung 1 in Fig. 1a, 1b und 1c weist eine erste Ader 2a und eine zweite Ader 3a auf. Diese Adern 2a, 3a sind metallische Leiter, die jeweils aus unterschiedlichen Werkstoffen, wie beispielsweise Kupfer, Eisen oder Nickel hergestellt sind. Der Durchmesser D3 der Adern 2a, 3a kann Werte von 0,15 bis 0,3 mm² aufweisen. Bevorzugt besitzen beide Adern den gleichen Durchmesser D3. In einer bevorzugten Ausführungsform beträgt der Durchmesser D3 der beiden Adern 2a, 3a einer Thermoleitung 1 jeweils 0,22 mm². Jede Ader 2a, 3a ist aus sieben Litzen ausgebildet, wobei diese bevorzugt verdrillt angeordnet sind. Die Anzahl der Litzen kann auch kleiner oder größer sein.

Die erste Ader 2a ist mit einer ersten Aderisolierung 2b und die zweite Ader 3a ist mit einer zweiten Aderisolierung 3b ausgebildet. Die Aderisolierung 2b, 3b kann beispielsweise aus PVC, Silikon, Glasseide oder Teflon (z.B. FEP, PFA, PTFE) hergestellt sein. Die Aderisolierung 2b, 3b kann außerdem als gebänderte und gesinterte PTFE-Isolation ausgebildet sein.

Die erste Ader 2a bildet mit ihrer ersten Aderisolierung 2b ein erstes Leitungselement 2. Die zweite Ader 3a bildet mit ihrer zweiten Aderisolierung 3b und/ oder mit dem separat ummantelten Außenisoliermaterial 4, wie in Fig. 1b veranschaulicht, ein zweites Leitungselement 3. Der Querschnitt des ersten und zweiten Leitungselements 2, 3 ist im Wesentlichen kreisrund ausgebildet. Das erste Leitungselement 2 weist einen ersten Außendurchmesser D1 auf, das zweite Leitungselement 3 einen zweiten Außendurchmesser D2. Die beiden Außendurchmesser D1, D2 sind unterschiedlich groß.

In einer Ausführungsform gemäß der Erfindung ist der erste Außendurchmesser D1 kleiner als der zweite Außendurchmesser D2, wenn die erste und zweite Ader 2a, 3a den gleichen Durchmesser D3 aufweisen und entweder
1) wie in Fig. 1b veranschaulicht, das erste Aderisoliermaterial 2b dünner ausgebildet ist als das zweite Aderisoliermaterial 3b und das mindestens einmal separat um die zweite Ader 3a ummantelte Außenisoliermaterial 4 zusammen; oder
2) wie in Fig. 1a veranschaulicht, das zweite Aderisoliermaterial 3b dicker als das erste Aderisoliermaterial 2b ausgebildet ist, und nur das zweite Aderisoliermaterial 3b ausgebildet ist; oder
3) wie in Fig. 1c veranschaulicht, das mindestens einmal separat um die zweite Ader 3a ummantelte Außenisoliermaterial 4 dicker als das erste Aderisoliermaterial 2b ausgebildet ist, und kein zweites Aderisoliermaterial 3b ausgebildet ist.

In manchen Ausführungsformen kann der erste Außendurchmesser D1 kleiner als der zweite Außendurchmesser D2 sein, wenn die erste Ader 2a einen kleineren Durchmesser D1 als die zweite Ader 3a aufweist und wobei das zweite Leitungselement 3 aus der zweiten Ader 3a, dem zweiten Aderisoliermaterial 3b und/oder dem mindestens einmal separat um die zweite Ader 3a ummantelten Außenisoliermaterial 4 besteht.

In manchen Ausführungsformen ist durch entsprechende Wahl der Isolierschichtdicke der erste Außendurchmesser D1 kleiner als der zweite Außendurchmesser D2, obwohl die erste Ader 2a einen größeren Durchmesser als die zweite Ader 3a aufweist. Dabei kann das zweite Leitungselement 3 aus der zweiten Ader 3a, dem zweiten Aderisoliermaterial 3b und/oder dem mindestens einmal separat um die zweite Ader 3 ummantelten Außenisoliermaterial 4 bestehen.

Das Aderisoliermaterial 2b, 3b und die Außenisolierung 4 sind bevorzugt aus Teflon, beispielsweise PTFE (Polytetrafluorethylen) oder PFA (Perfluoralkoxy-Polymere), ausgebildet. Teflon ist ein Material mit einer hohen Temperaturbeständigkeit. Da Thermoleitungen oftmals hohen Temperaturfluktuationen ausgesetzt sind, wird bevorzugt Teflon zur Herstellung der Aderisolierung 2b, 3b und der Außenisolierung 4 verwendet. Dieser innere und äußere Teflonmantel ist bis etwa 260° Celsius als stabil zu betrachten.. In einem Ausführungsbeispiel sind das Aderisoliermaterial 2b, 3b und die Außenisolierung 4 aus PFA hergestellt. PFA ist wie PTFE thermisch stabil und weist darüber hinaus eine vorteilhafte Griffigkeit auf. Eine aus PFA hergestellte Außenisolierung 4 ermöglicht somit eine griffige Handhabung, d.h. sie erzeugt eine haptische Rückmeldung beim Einstecken einer Thermoleitung beispielsweise in einen Aufnahmekanal eines Modulblockes.

Ein geeignetes Verfahren für die Herstellung der Außenisolierung 4 aus Teflon stellt das Bondverfahren dar, wodurch nur bestimmte Formen der Thermoleitung 1 verfahrenstechnisch zu ermöglichen sind. Unter anderem scheiden dadurch verpolsichere Profile aus, die kleinste Knicke oder Wölbungen aufweisen. Wie in der bevorzugten Ausführungsform in Fig. 1a, 1b und 1c veranschaulicht, weist der Querschnitt der Thermoleitung 1 eine "tropfenförmige" Ausgestaltung auf, d.h. ausgehend von einem ersten, im Wesentlichen als Halbkreis ausgebildeten Abschnitt verlaufen zwei, sich konisch verjüngende, geradenförmige Abschnitte, die jeweils an ihren von dem ersten Abschnitt entfernten Enden mit einem zweiten, im Wesentlichen als Halbkreis ausgebildeten Abschnitt verbunden sind. Der erste Abschnitt weist einen von dem zweiten Abschnitt unterschiedlichen Durchmesser auf.

Fig. 2 veranschaulicht ein Ausführungsbeispiel des Modulblocks 5, der zur elektrischen Verbindung mit der Thermoleitung 1 dient. Der Modulblock 5 kann als ein quaderförmiges Gehäuse ausgebildet sein. Dabei weist er eine Länge im Bereich von 90 - 110 mm, eine Breite im Bereich von 20 - 40 mm und eine Höhe im Bereich von 10 - 30 mm, bevorzugt eine Länge im Bereich von 95 - 98 mm, eine Breite im Bereich von 27 - 33 mm und eine Höhe von 15 - 19 mm auf. An einer der langen Seiten des quaderförmigen Modulblocks 5 sind acht Öffnungen von Aufnahmekanälen 6 angeordnet, die zur Aufnahme von bis zu acht Thermoleitungen 1 dienen. Es sei darauf hingewiesen, dass ein Modulblock 5 mindestens einen Aufnahmekanal 6 aufweist, der als Anschluss einer Thermoleitung 1 dient. Jede Öffnung der Aufnahmekanäle 6 weist einen Querschnitt mit einer passenden Gegenform zu dem Querschnitt der erfindungsgemäßen Thermoleitung 1 auf. Damit ist eine verpolsichere Aufnahme der Thermoleitung 1 gesichert.

Der Modulblock 5 ist ferner so ausgebildet, dass eine Thermoleitung 1 mindestens 1 cm bis 1,5 cm in das Gehäuse eingeführt werden kann. Dazu ist ein entsprechend geringer Reibungswiderstand notwendig.

Jeder der Anschlüsse zur Aufnahme einer Thermoleitung 1 wird in dem Modulblock 5 durch eine Platine 7 in seiner Länge begrenzt. Auf dieser Platine 7 sind pro Anschluss zwei Kontaktstifte 7a, 7b platziert. Diese Kontaktstifte 7a, 7b sind parallel zu der Ausrichtung der Öffnung des Aufnahmekanals 6 ausgerichtet und sind im Wesentlichen orthogonal auf der Platine 7 befestigt. Die zwei Kontaktstifte 7a, 7b dienen zur elektrischen Kontaktierung mit einer Thermoleitung 1, d.h. jeweils ein Kontaktstift 7a, 7b wird so in Kontakt mit jeweils einer Ader 2a, 3a einer Thermoleitung 1 gebracht, dass eine elektrisch leitende Verbindung hergestellt ist.

Fig. 3 veranschaulicht ein bevorzugtes Ausführungsbeispiel des Eindringens bzw. elektrischen Kontaktierens der Kontaktstifte 7a, 7b in die Zwischenräume der mit einer Vielzahl von Litzen aufgebauten Ader 2a, 3a. Bevorzugt sind die Kontaktstifte 7a, 7b demzufolge als Nadeln ausgebildet, wobei die Bauform der Nadeln so gestaltet ist, dass eine Spreizung der Thermoleitung 1, die im elektrisch verbundenen Zustand durch die Nadeln entsteht, gleichzeitig die Außenisolierung 4 der Thermoleitung 1 in die Passung, wie beispielsweise die Öffnung des Aufnahmekanals 6 und eine Kabelführung 8, presst, so dass ein Herausrutschen der Thermoleitung 1 vermieden wird.

Die Nadeln sind demnach mit einem geeigneten Spreizwinkel α ausgebildet, um Kontaktverlust mit der Thermoleitung 1 zu verhindern. Im Allgemeinen führt ein kleiner Spreizwinkel α zu einer hohen Eindringtiefe. Der Anpressdruck ist dann jedoch gering, was zu einem geringen Halt der Kontaktstifte 7a, 7b in den Zwischenräumen der Ader 2a, 3a führt. Im Gegensatz dazu führt ein großer Spreizwinkel α zu einer geringen Eindringtiefe, wodurch ein Herausrutschen der Thermoleitung 1 möglich ist. Darüber hinaus hängt der Anpressdruck von den Fertigungstoleranzen des Aufnahmekanals ab. Gemäß dem Ausführungsbeispiel ist der Spreizwinkel α derart ausgebildet, dass ein optimaler Kompromiss zwischen Anpressdruck und Eindringtiefe besteht. Bevorzugt ist der Spreizwinkel α kleiner als 45°, besonders bevorzugt kleiner als 30° ausgebildet.

Ferner kann der Spitz der Nadeln kugelförmig gestaltet sein, um ein besseres Eindringen in die Zwischenräume der Adern 2a, 3a zu ermöglichen.

Die Ausgestaltung der Nadeln, beispielsweise des Durchmessers, ist aufgrund der kleinen Leitungsquerschnitte der Thermoleitung 1, in die die Nadeln eingestochen werden, auf maximale Werte von etwa 0,40 - 0,60 mm, bevorzugt auf 0,53 mm begrenzt. Zur Sicherstellung der mechanischen Stabilität können Materialien wie Kupfer oder Messing, bevorzugt jedoch hochvergütete Stähle in Verbindung mit einer Goldoberfläche verwendet werden.

Zurückkommend zu dem Ausführungsbeispiel wie in Fig. 2 veranschaulicht, ist zwischen den Öffnungen der Aufnahmekanäle 6 und der Platine 7 eine Zugentlastung 9 angebracht. Diese stellt sicher, dass die Thermoleitung 1 unter keinen Umständen aus dem Modulblock 5 herausrutscht. Die Zugentlastung 9 stellt darüber hinaus sicher, dass die Verbindung zwischen einer flexiblen elektrischen Leitung, wie der Thermoleitung 1, und dem Modulblock 5 gegen mechanische Beanspruchung geschützt ist. Die erfindungsgemäße mechanische Zugentlastung 9 ist ver- und entriegelbar. Eine Ausführungsform sieht vor, die Zugentlastung 9 mit Widerhaken zu versehen. Eine weitere Ausführungsform sieht eine Klemmung mittels Madenschrauben vor.

Ferner befindet sich zwischen der Zugentlastung 9 und der Platine 7 eine Kabelführung 8. Diese kann in Richtung der Platine konisch ausgebildet sein. Durch die konische Ausgestaltung der Kabelführung 8 führt der Endbereich der Kabelführung 8 zu einer Klemmwirkung mit der Thermoleitung 1 im kontaktierten Zustand.

In Fig. 4 ist ein Ausführungsbeispiel des Systems von Modulblöcken 10 veranschaulicht, bestehend aus einer Grundplatte 11, zwei Modulblöcken 5a, 5b, wobei beispielhaft zwei Thermoleitungen 1 zur Verbindung mit dem System 10 dargestellt sind.

Die Grundplatte 11 ist flach, quaderförmig ausgebildet und weist im Wesentlichen die Länge und Breite eines Modulblocks 5 auf. Außerdem ist auf ihrer Oberseite eine dort im Wesentlichen mittig verlaufende Nut 12 zur Aufnahme einer Flachbandleitung ausgebildet. Ferner sind auf der Platte 11 Einsteckplätze 13 für die Verbindungsbolzen 15 angeordnet, die funktional als Kontaktstellen bezeichnet werden können. Bevorzugt sind vier Einsteckplätze 13 ausgebildet, die zudem jeweils in einer der vier Ecken der Grundplatte 11 angeordnet sind.

Beim Zusammenführen der Grundplatte 11 mit einem Modulblock 5a wird die Flachbandleitung in die Nut 12 geklemmt. In der Nut 12 sind vier Nadelkontakte 14 so angeordnet, dass sie in die Flachbandleitung stechen und dabei die Adern +12V, GND, CAN-L und CAN-H kontaktieren. Gleichzeitig greifen die an der Unterseite des ersten Modulblocks 5a ausgebildeten Verbindungsbolzen 15 in die entsprechenden Einsteckplätze 13 ein und bilden eine feste Verbindung des ersten Modulblocks 5a mit der Grundplatte 11. Dabei verbinden elektrische Leitungen innerhalb der Grundplatte 11 die Einsteckplätze 13 für die Verbindungsbolzen 15 mit den Nadelkontakten 14, welche wiederum die Adern der Flachbandleitung kontaktieren.

Das Entfernen des ersten Modulblocks 5a von der Grundplatte 11 führt dazu, dass die eingeklemmte Flachbandleitung befreit wird und sich die Nadelkontakte 14 aus der Flachbandleitung zurückziehen, ohne diese zu beschädigen.

Fig. 4 veranschaulicht ferner, dass ein weiterer, zweiter Modulblock 5b Bestandteil des erfindungsgemäßen Ausführungsbeispiels ist. Die Verbindung zwischen den zwei Modulblöcken 5a und 5b findet über vier Verbindungsbolzen 15 statt. Diese an der Unterseite des zweiten Modulblocks 5b montierten Verbindungsbolzen 15 greifen beim Verbinden in die an der Oberseite des ersten Modulblocks 5a ausgebildeten Einsteckplätze 17 ein und führen zu einer festen Verbindung der zwei Modulblöcke 5a, 5b.

In manchen Ausführungsformen sind eine Vielzahl von Modulblöcken 5a, 5b auf der Grundplatte 11 angeordnet.

Das Ausführungsbeispiel des Systems von Modulblöcken 10 dient vorteilhafterweise zur verpolsicheren Aufnahme von 8 bis zu 32 Thermoleitungen 1, die jeweils über den Aufnahmekanal mit den Kontaktstiften elektrisch und mechanisch in Kontakt mit dem entsprechenden Modulblock 5a, 5b gebracht werden.

### BEZUGSZEICHEN

- 1: Querschnitt der Thermoleitung
- 2: erstes Leitungselement
- 2a: erste Ader
- 2b: erstes Aderisoliermaterial
- 3: zweites Leitungselement
- 3a: zweite Ader
- 3b: zweites Aderisoliermaterial
- 4: Außenisoliermaterial
- 5: Modulblock
- 5a: erster Modulblock
- 5b: zweiter Modulblock
- 6: Öffnung des Aufnahmekanals
- 7: Platine
- 7a: erster Kontaktstift
- 7b: zweiter Kontaktstift
- 8: Kabelführung
- 9: Zugentlastung
- 10: System von Modulblöcken
- 11: Grundplatte
- 12: Nut
- 13: Einsteckplätze
- 14: Nadelkontakte
- 15: Verbindungsbolzen
- D1: erster Außendurchmesser
- D2: zweiter Außendurchmesser
- D3: Aderdurchmesser

## Patentansprüche

1. Thermoleitung (1) zur Übertragung eines elektrischen Signals, umfassend:
eine erste Ader (2a) und eine zweite Ader (3a), ein erstes Aderisoliermaterial (2b) und ein zweites Aderisoliermaterial (3b) sowie ein Außenisoliermaterial (4), wobei die erste Ader (2a) und die zweite Ader (3a) aus unterschiedlichen Werkstoffen ausgebildet sind,
wobei die erste Ader (2a) mit dem ersten Aderisoliermaterial (2b) mindestens einmal ummantelt ist und ein erstes Leitungselement (2) bildet, und die zweite Ader (3a) mit dem zweiten Aderisoliermaterial (3b) mindestens einmal ummantelt ist und mit dem Außenisoliermaterial (4) mindestens einmal separat ummantelt ist, und ein zweites Leitungselement (3) bildet,
wobei das erste Leitungselement (2) einen ersten Außendurchmesser (D1) aufweist und das zweite Leitungselement (3) einen zweiten Außendurchmesser (D2) aufweist, und der erste Außendurchmesser (D1) sich von dem zweiten Außendurchmesser unterscheidet (D2), und
wobei die beiden Leitungselemente (2, 3) mit dem Außenisoliermaterial (4) wenigstens einmal gemeinsam ummantelt sind,
derart, dass der Querschnitt der Thermoleitung (1) eine verpolsichere Kodierung aufweist.

2. Thermoleitung nach Anspruch 1, wobei die zweite Ader (3a) nur mit dem zweiten Aderisoliermaterial (3b) mindestens einmal ummantelt ist und der zweite Außendurchmesser (D2) größer als der erste Außendurchmesser (D1) ist.

3. Thermoleitung nach Anspruch 2, wobei die erste und zweite Ader (2a, 3a) den gleichen Durchmesser (D3) aufweisen.

4. Thermoleitung nach einem der vorherigen Ansprüche, wobei die erste Ader (2a) aus Nickel und die zweite Ader (3a) aus Nickel-Chrom ausgebildet sind.

5. Thermoleitung nach einem der vorherigen Ansprüche, wobei das erste und das zweite Aderisoliermaterial (2b, 3b) und das Außenisoliermaterial (4) Teflon, vorzugsweise PFA aufweist.

6. Modulblock (5) umfassend eine Gruppe von Anschlüssen, die jeweils umfassen:
einen ersten Kontaktstift (7a) und einen zweiten Kontaktstift (7b) zur elektrischen Kontaktierung mit der ersten Ader (2a) und der zweiten Ader (3a) der Thermoleitung (1) nach einem der Ansprüche 1 bis 5, einen Aufnahmekanal (8), sowie eine Zugentlastung (9),
wobei der Querschnitt des Aufnahmekanals (8) derart ausgebildet ist, dass eine nach einem der Ansprüche 1 bis 5 kodierte Thermoleitung (1) verpolsicher in den Aufnahmekanal (8) einführbar ist,
wobei die zwei Kontaktstifte (7a, 7b) innerhalb des Modulblocks (5) in Längsrichtung des Aufnahmekanals (8) angeordnet sind, derart dass jeweils ein Kontaktstift (7a, 7b) eine Ader (2a, 3a) der eingeführten Thermoleitung (1) im Wesentlichen axial kontaktiert, und
wobei die Zugentlastung (9) zur zugentlastenden und mechanischen Verbindung einer eingeführten Thermoleitung (1) vorgesehen ist.

7. Modulblock nach Anspruch 6, wobei die zwei Kontaktstifte (7a, 7b) als dünne Nadeln mit abgerundeten Nadelspitzen ausgebildet sind, so dass das Eindringen der Nadelspitzen in die Zwischenräume der jeweils mit einer Vielzahl von Litzen ausgebildeten Adern (2a, 3a) möglich ist.

8. Modulblock nach einem der Ansprüche 6 oder 7, wobei die Zugentlastung (9) als Schneid-Klemm-Lösung vorgesehen ist.

9. Modulblock nach einem der Ansprüche 6 bis 8, wobei im Innern des Modulblocks (5) wenigstens ein Dichtring zur Abdichtung zwischen dem Aufnahmekanal (8) und der eingeführten Thermoleitung (1) vorgesehen ist.

10. Modulblock nach einem der Ansprüche 6 bis 9, wobei der Modulblock (5) acht Anschlüsse aufweist zur Aufnahme von bis zu acht Thermoleitungen (1).

11. System von Modulblöcken (10), mit wenigstens zwei Modulblöcken (5a, 5b) nach einem der Ansprüche 6 bis 10, zur Aufnahme einer entsprechenden Anzahl von Thermoleitungen (1), und mit einer Grundplatte (11) zum Anschließen eines Flachbandkabels an das System von Modulblöcken (10),
wobei die Grundplatte (11) mit einem ersten Modulblock (5a) mittels mindestens einem Verbindungselement (15) mechanisch und elektrisch verbunden ist, und
wobei der erste Modulblock (5a) mit einem oder mehreren der weiteren Modulblöcken (5b) mittels mindestens einem Verbindungselement (15) mechanisch und elektrisch verbunden ist.

12. System von Modulblöcken nach Anspruch 11, wobei die Grundplatte (11) Nadelkontakte (14) aufweist, die dazu ausgelegt sind, in das anzuschließende Flachbandkabel einzudringen und Adern des anzuschließenden Flachbandkabels elektrisch zu kontaktieren.

13. System von Modulblöcken nach einem der Ansprüche 11 oder 12, wobei die Verbindungselemente (15) für die Stromverbindung und die CAN Datenübertragung dienen.

14. System von Modulblöcken nach einem der Ansprüche 11 bis 13, wobei jeder Modulblock (5a, 5b) und die Grundplatte (11) wenigstens vier Verbindungselemente (15) aufweist, die insbesondere zur Übertragung von jeweils einem der Signale +12V, GND, CAN-L und CAN-H dienen.

## Claims

1. Thermal line (1) for transmitting an electrical signal, comprising:
a first core (2a) and a second core (3a), a first core insulation material (2b) and a second core insulation material (3b) and also an external insulation material (4), wherein the first core (2a) and the second core (3a) are designed from different materials,
wherein the first core is sheathed at least once by the first core insulation material (2b) and forms a first line element (2), and the second core (3a) is sheathed at least once by the second core insulation material (3b) and is separately sheathed at least once by the external insulation material (4) and forms a second line element (3),
wherein the first line element (2) has a first outside diameter (D1) and the second line element (3) has a second outside diameter (D2), wherein the first outside diameter (D1) differs from the second outside diameter (D2), and
wherein the two line elements (2, 3) are jointly sheathed at least once by the external insulation material (4),
in such a way that the cross section of the thermal line (1) has a coding which is secured against reversal.

2. Thermal line according to claim 1, wherein the second core (3a) is only sheathed by the second core insulation material (3b) at least once and the second outside diameter (D2) is greater than the first outside diameter (D1).

3. Thermal line according to claim 2, wherein the first and the second cores (2a, 3a) have the same diameter (D3).

4. Thermal line according to one of the previous claims, wherein the first core (2a) is made of nickel and the second core (3a) is made of nickel-chromium.

5. Thermal line according to one of the previous claims, wherein the first and the second core insulation material (2b, 3b) and the external insulation material (4) contain Teflon, preferably PFA.

6. Module block (5) comprising a group of connections, each comprising:
a first contact pin (7a) and a second contact pin (7b) for the electrical connection with the first core (2a) and the second core (3a) of the thermal line (1) according to one of the claims 1 to 5, a record channel (8), as well as a strain relief (9),
wherein the cross-section of the record channel (8) is designed in such a way that a thermal line (1) coded according to one of the claims 1 to 5 can be inserted into the record channel (8) secured against reversal,
wherein the two contact pins (7a, 7b) are arranged inside the module block (5) in longitudinal direction of the record channel (8) in such a way that one contact pin (7a, 7b) each essentially makes axial contact with a core (2a, 3a) of the inserted thermal line (1), and
wherein the strain relief (9) is provided for the strain-relieving and mechanical connection of an inserted thermal line (1).

7. Module block according to claim 6, wherein the two contact pins (7a, 7b) are designed as thin needles with rounded needle tips, so that the penetration of the needle tips into the spaces of the cores (2a, 3a) each formed with a multitude of strands is possible.

8. Module block according to one of the claims 6 or 7, wherein the strain relief (9) is intended as an insulation-displacement solution.

9. Module block according to one of the claims 6 to 8, wherein at least one sealing ring is intended in the inside of the module block (5) for sealing between the record channel (8) and the inserted thermal line (1).

10. Module block according to one of the claims 6 to 9, wherein the module block (5) has eight connections to accommodate up to eight thermal lines (1).

11. System of module blocks (10), with at least two module blocks (5a, 5b) according to one of the claims 6 to 10, for the accommodation of a respective number of thermal lines (1), and with a base plate (11) for connecting a ribbon cable to the system of module blocks (10),
wherein the base plate (11) is connected mechanically and electrically with a first module block (5a) by means of at least one connection element (15), and
wherein the first module block (5a) is connected mechanically and electrically with one or several of the other module blocks (5b) by means of at least one connection element (15).

12. System of module blocks according to claim 11, wherein the base plate (11) has needle contacts (14) designed to penetrate the ribbon cable to be connected and to make electrical contact with cores of the ribbon cable to be connected.

13. System of module blocks according to one of the claims 11 or 12, wherein the connection elements (15) serve the electrical connection and the CAN data transmission.

14. System of module blocks according to one of the claims 11 to 13, wherein each module block (5a, 5b) and the base plate (11) have at least four connection elements (15) that especially serve the transmission of one of the signals +12V, GND, CAN-L, and CAN-H, respectively.

## Revendications

1. Ligne thermoélectrique (1) servant à la transmission d'un signal électrique, comprenant :
un premier brin (2a) et un second brin (3a), un premier matériau d'isolation de brin (2b) et un second matériau d'isolation de brin (3b) ainsi qu'un matériau d'isolation extérieure (4), dans laquelle le premier brin (2a) et le second brin (3a) sont réalisés à partir de matériaux différents,
dans laquelle le premier brin (2a) est enveloppé au moins une fois du premier matériau d'isolation de brin (2b) et forme un premier élément de ligne (2), et le second brin (3a) est enveloppé au moins une fois du second matériau d'isolation de brin (3b) et est enveloppé au moins une fois séparément du matériau d'isolation extérieure (4) et forme un second élément de ligne (3),
dans laquelle le premier élément de ligne (2) présente un premier diamètre extérieur (D1) et le second élément de ligne (3) présente un second diamètre extérieur (D2), et le premier diamètre extérieur (D1) se distingue du second diamètre extérieur (D2), et
dans laquelle les deux éléments de ligne (2, 3) sont enveloppés au moins une fois conjointement du matériau d'isolation extérieure (4),
de telle manière que la section transversale de la ligne thermoélectrique (1) présente un codage permettant d'éviter toute inversion de polarité.

2. Ligne thermoélectrique selon la revendication 1, dans laquelle le second brin (3a) est enveloppé au moins une fois seulement avec le second matériau d'isolation de brin (3b) et le second diamètre extérieur (D2) est plus grand que le premier diamètre extérieur (D1).

3. Ligne thermoélectrique selon la revendication 2, dans laquelle le premier et le second brin (2a, 3a) présentent le même diamètre (D3).

4. Ligne thermoélectrique selon l'une quelconque des revendications précédentes, dans laquelle le premier brin (2a) est réalisé à partir de nickel et le second brin (3a) est réalisé à partir de nickel-chrome.

5. Ligne thermoélectrique selon l'une quelconque des revendications précédentes, dans laquelle le premier et le second matériau d'isolation de brin (2b, 3b) et le matériau d'isolation extérieure (4) présentent du Teflon, de préférence du PFA (perfluoroalkoxy).

6. Bloc modulaire (5) comprenant un groupe de bornes, qui comprennent respectivement :
une première tige de contact (7a) et une seconde tige de contact (7b) servant à établir un contact électrique avec le premier brin (2a) et le second brin (3a) de la ligne thermoélectrique (1) selon l'une quelconque des revendications 1 à 5, un canal de réception (8), ainsi qu'un système de soulagement de traction (9),
dans lequel la section transversale du canal de réception (8) est réalisée de telle manière qu'une ligne thermoélectrique (1) codée selon l'une quelconque des revendications 1 à 5 peut être introduite dans le canal de réception (8) de manière à éviter toute inversion de polarité,
dans lequel les deux tiges de contact (7a, 7b) sont disposées à l'intérieur du bloc modulaire (5) dans le sens longitudinal du canal de réception (8) de telle manière que respectivement une tige de contact (7a, 7b) établit un contact sensiblement de manière axiale avec un brin (2a, 3a) de la ligne thermoélectrique (1) introduite, et
dans lequel le système de soulagement de traction (9) est prévu pour raccorder avec soulagement de traction et mécaniquement une ligne thermoélectrique (1) introduite.

7. Bloc modulaire selon la revendication 6, dans lequel les deux tiges de contact (7a, 7b) sont réalisées sous la forme d'aiguilles fines avec des pointes d'aiguille arrondies de sorte que la pénétration des pointes d'aiguille dans les espaces intermédiaires des brins (2a, 3a) réalisés respectivement avec une pluralité de torons est possible.

8. Bloc modulaire selon l'une quelconque des revendications 6 ou 7, dans lequel le système de soulagement de traction (9) est prévu en tant que solution de découpage-serrage.

9. Bloc modulaire selon l'une quelconque des revendications 6 à 8, dans lequel au moins une bague d'étanchéité servant à étanchéifier entre le canal de réception (8) et la ligne thermoélectrique (1) introduite est prévue à l'intérieur du bloc modulaire (5) .

10. Bloc modulaire selon l'une quelconque des revendications 6 à 9, dans lequel le bloc modulaire (5) présente huit bornes servant à recevoir jusqu'à huit lignes thermoélectriques (1).

11. Système de blocs modulaires (10), avec au moins deux blocs modulaires (5a, 5b) selon l'une quelconque des revendications 6 à 10, servant à recevoir un nombre correspondant de lignes thermoélectriques (1), et avec une plaque de base (11) servant à la connexion d'un câble plat au système de blocs modulaires (10),
dans lequel la plaque de base (11) est raccordée mécaniquement et électriquement à un premier des blocs modulaires (5a) au moyen d'au moins un élément de liaison (15), et
dans lequel le premier bloc modulaire (5a) est raccordé mécaniquement et électriquement à un ou à plusieurs des autres blocs modulaires (5b) au moyen d'au moins un élément de liaison (15).

12. Système de blocs modulaires selon la revendication 11, dans lequel la plaque de base (11) présente des contacts à aiguille (14), qui sont configurés pour pénétrer dans le câble plat à connecter et pour établir un contact électrique avec des brins du câble plat à connecter.

13. Système de blocs modulaires selon l'une quelconque des revendications 11 ou 12, dans lequel les éléments de liaison (15) servent au raccordement électrique et à la transmission de données CAN.

14. Système de blocs modulaires selon l'une quelconque des revendications 11 à 13, dans lequel chaque bloc modulaire (5a, 5b) et la plaque de base (11) présentent au moins quatre éléments de raccordement (15), qui servent en particulier à la transmission de respectivement un des signaux +12V, GND, CAN-L et CAN-H.
